# EUROPÄISCHE PATENTSCHRIFT

(11) **EP 1 155 915 B1**
(45) Veröffentlichungstag und Bekanntmachung des Hinweises auf die Patenterteilung: **26.10.2005**
(21) Anmeldenummer: 01104090.4
(22) Anmeldetag: 21.02.2001
(51) Int. Cl.: B60R 11/02

(54) **Elektronische Anlage mit einem Gehäuse oder Gestell für Module**
Electronic equipment with housing or frame for modules
Equipement électronique avec boîtier ou support pour des modules

(30) Priorität: 18.05.2000 DE 10024126
(43) Veröffentlichungstag der Anmeldung: 21.11.2001
(73) Patentinhaber: BECKER GmbH, 76307 Karlsbad (DE)
(72) Erfinder: Schöpp, Harald, Dipl.-Ing., 76275 Ettlingen (DE); Becker, Michael, Dipl.-Ing., 76661 Philippsburg (DE); Kobinger, Joachim, Dipl.-Ing., 75196 Remchingen-Singen (DE)
(74) Vertreter: Patentanwälte Westphal, Mussgnug & Partner

(56) Entgegenhaltungen:
- EP-A- 0 875 422
- DE-A- 4 201 657
- US-A- 4 426 684
- US-A- 5 289 378
- US-A- 5 546 273

## Beschreibung

Die Erfindung betrifft eine elektronische Anlage mit einem Gehäuse oder Gestell mit mehreren Fächern zur Aufnahme von Modulen nach dem Oberbegriff des Patentanspruches 1.

Derartige Anlagen sind beispielsweise aus der EP 0 875 422; US 5,546,273; US 4,426,684 und US 5,289,378 bekannt. Aus der DE 42 01 657 ist eine elektrische Anlage mit einem ringförmigen Netzwerk bekannt.

Modern ausgerüstete Kraftfahrzeuge sind z. B. mit einer Multimediaanlage ausgestattet, die neben dem klassischen Autoradio eine Vielzahl weiterer Module umfasst wie z. B. Kassettenspieler, CD-Spieler, DVD-Spieler, Fernsehempfänger, Navigationsanlage, Bildschirm, Lautsprecherboxen und Autotelefon mit Freisprecheinrichtung, um nur einige Beispiele zu nennen. Die einzelnen Geräte - im weiteren Verlauf Module genannt - sind beispielsweise über eine gemeinsame Busleitung miteinander verbunden, die bevorzugt als ein ein ringförmiges Netzwerk bildender optischer Datenbus ausgeführt ist.

Weil die Ausstattung eines Kraftfahrzeuges mit Multimediageräten individuell den Kundenwünschen entsprechend erfolgt, erfordert der Einbau einer individuell zugeschnittenen Multimediaanlage mehr Zeit und einen größeren Arbeitsaufwand als der Einbau gleicher Multimediaanlagen in ein Kraftfahrzeug in Serie. Spätere Um- oder Nachrüstungen einer derartigen Multimediaanlage gestalten sich ebenfalls zeit- und arbeitsaufwändig.

Es ist daher Aufgabe der Erfindung, eine aus Modulen nach individuellen Gesichtspunkten aufgebaute elektronische Anlage mit einem ringförmigen Netzwerk, insbesondere eine Multimediaanlage für ein Kraftfahrzeug, so zu gestalten, dass deren Einbau sowie Um- und Nachrüstungen ohne hohen Zeit- und Arbeitsaufwand durchführbar sind.

Bei einer elektronischen Anlage mit einem Gehäuse oder einem Gestell mit mehreren Fächern zur Aufnahme von Modulen wird diese Aufgabe mit den Merkmalen des Anspruchs 1 gelöst. Dabei ist insbesondere für jedes Fach ein Steckverbindungselement zum Anschließen eines in das Fach steckbaren Moduls mit einem passenden Steckverbindungselement vorgesehen , wobei alle Steckverbindungselemente der Fächer über eine erste Busleitung miteinander verbunden sind, an die außerhalb des Gehäuses oder des Gestells angeordnete Module über eine zweite Busleitung anschließbar sind. Die erste und die zweite Busleitung bilden zusammen eine gemeinsame Busleitung, die als Ringleitung ausgeführt ist.

Die einzelnen Module sind in den Fächern des Gehäuses oder des Gestells untergebracht. Jedes Modul und jedes Fach ist mit einem Steckverbindungselement ausgerüstet. Die Steckverbindungselemente der Module und der Fächer sind kompatibel und vorzugsweise als Stecker und Buchse ausgeführt. Die Stecker einerseits und die Buchsen andererseits können gleich ausgeführt sein, so dass jedes Modul in jedes Fach steckbar ist. Die Stecker und die Buchsen können aber auch modulspezifisch ausgeführt sein, so dass in ein bestimmtes Fach nur ein hierfür vorgesehenes Modul steckbar ist. Bei einem anderen Modul passt der Stecker dagegen nicht zur Buchse.

Beim Einschieben eines Moduls in ein Fach des Gehäuses oder des Gestells werden der Stecker und die Buchse ineinandergesteckt, so dass das Modul nun an die erste Busleitung angeschlossen ist, welche die Steckverbindungselemente der Fächer miteinander verbindet. An diese erste Busleitung können nun über eine zweite Busleitung weitere außerhalb des Gehäuses oder des Gestells angeordnete Module angeschlossen werden. Bei einer Multimediaanlage in einem Kraftfahrzeug sind die Fächer des Gehäuses oder Gestells zur Aufnahme von z. B. einem Autoradio, einem Kassettenspieler, einem CD-Spieler, einem DVD-Spieler, einem Fernsehempfänger, einer Navigationsanlage, einem Autotelefon oder einem Handy vorgesehen, während eine Anzeigevorrichtung und eine Bedienvorrichtung am Armaturenbrett und Lautsprecher z. B. in den Türen oder an anderen geeigneten Stellen angeordnet sind.

Beim Einbau einer derartigen Multimediaanlage brauchen die für das Gestell vorgesehenen Module daher nur in die für sie vorgesehenen Fächer gesteckt zu werden, während die zweite Busleitung, an welche die restlichen Module angeschlossen sind, an die die Verbindungselemente des Gehäuses oder Gestells miteinander verbindende erste Busleitung angeschlossen wird, um z. B. eine Ringleitung zu vervollständigen.

Beim Umrüsten der Mulitmediaanlage werden in die -Fächer gesteckte Module gegen andere ausgetauscht, beim Nachrüsten werden noch unbelegte Fächer mit Modulen bestückt.

Die Erfindung wird nun anhand der Figuren näher beschrieben und erläutert.

In der Zeichnung zeigen:
- Figur 1: ein Blockschaltbild eines Ausführungsbeispiels der Erfindung,
- Figur 2: ein Gestell des Ausführungsbeispieles in perspektivischer Ansicht,
- Figur 3: die Rückseite des Gestells,
- Figur 4: ein in ein Fach des Gestells steckbares Modul in perspektivischer Ansicht und
- Figur 5: die Rückseite des Moduls.

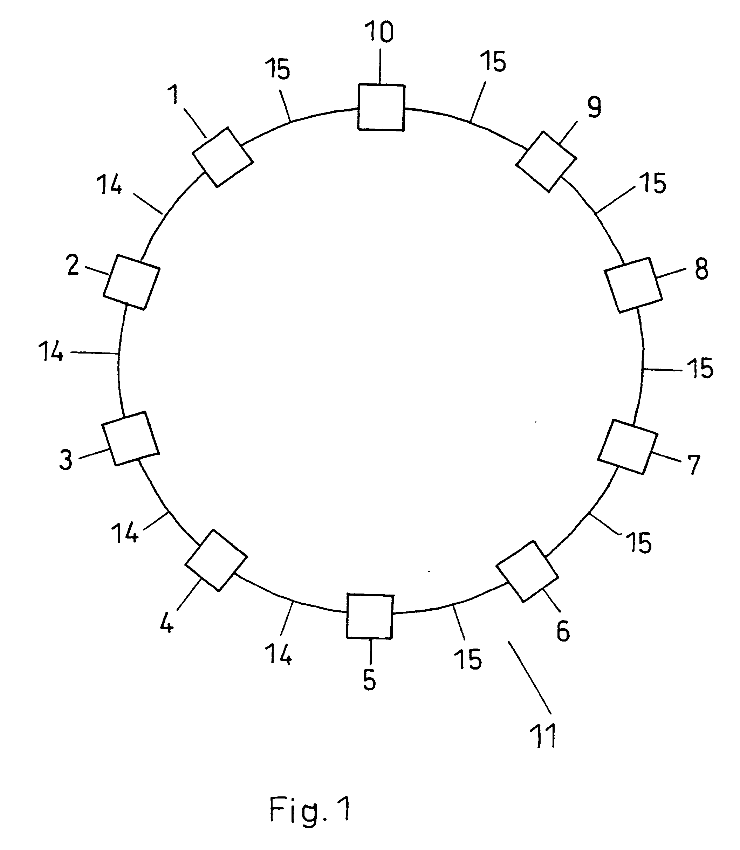

In der Figur 1 ist ein Blockschaltbild eines erfindungsgemäßen Ausführungsbeispieles einer Multimediaanlage gezeigt.

Ein Autoradio 1, ein CD-Spieler 2, ein DVD-Spieler 3, ein Kassettenspieler 4, ein Navigationsgerät 5, eine Bedienvorrichtung 6, eine Anzeigevorrichtung 7, Lautsprecher 8 und 9 sowie ein Bildschirm 10 sind über eine Busleitung 11, die z. B. als optischer Datenbus ausgeführt ist, ein ringförmiges Netzwerk bildend miteinander verbunden. Das Autoradio 1, der CD-Spieler 2, der DVD-Spieler 3, der Kassettenspieler 4 und das Navigationsgerät 5 sind im Gehäuse oder Gestell angeordnet, wo sie über die erste Busleitung 14 miteinander verbunden sind. Die Bedienvorrichtung 6, die Anzeigevorrichtung 7, die Lautsprecher 8 und 9 und der Bildschirm 10 sind über die zweite Busleitung 15 miteinander verbunden und an die erste Busleitung 14 angeschlossen. Die beiden Busleitungen 14 und 15 sind zu einer Ringleitung 11 geschlossen.

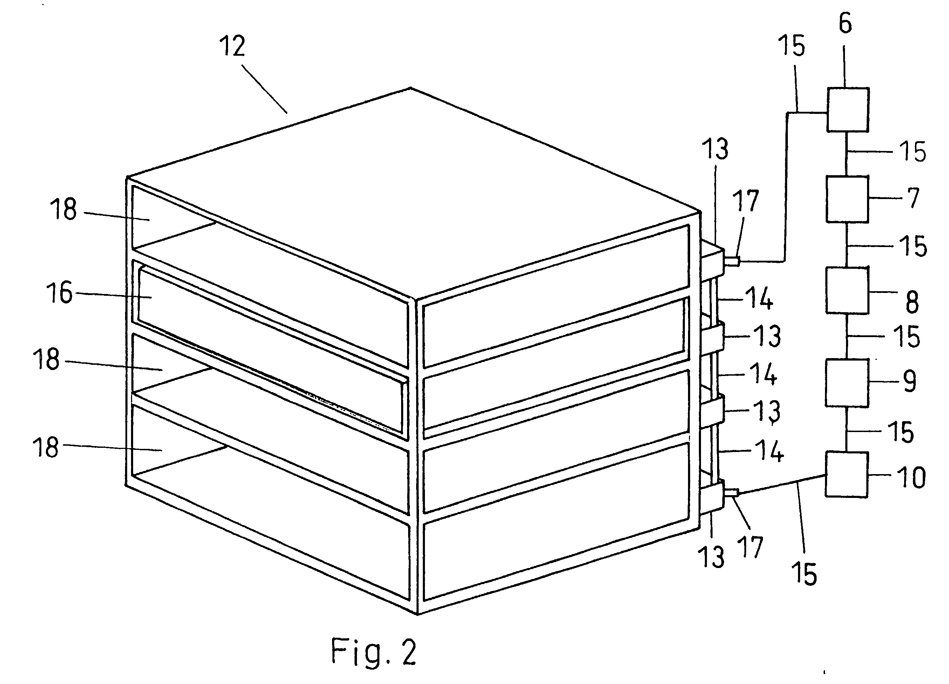

In der Figur 2 ist ein Gestell des Ausführungsbeispieles in perspektivischer Ansicht gezeigt.

Das an der Frontseite offene Gestell 12 weist mehrere Fächer 18 zur Aufnahme der Module auf. An der Rückseite des Gestells 12 sind an jedem Fach Steckverbindungselemente 13 angeordnet, in welche Steckverbindungselemente der Module steckbar sind. Die Steckverbindungselemente 13 an der Rückseite des Gestells 12 sind über die erste Busleitung 14 miteinander verbunden. Es sind außerdem zwei Anschlüsse 17 vorgesehen, an welche die zweite Busleitung 15 angeschlossen ist, die die Bedienvorrichtung 6, die Anzeigevorrichtung 7, die Lautsprecher 8 und 9 sowie den Bildschirm 10 miteinander verbindet. Die beiden Busleitungen 14 und 15 bilden die geschlossene Ringleitung 11. Der Übersichtlichkeit wegen ist nur in einem der Fächer 18 ein Modul 16 gezeichnet. Anstelle eines Gestells kann auch ein geschlossenes Gehäuse vorgesehen sein.

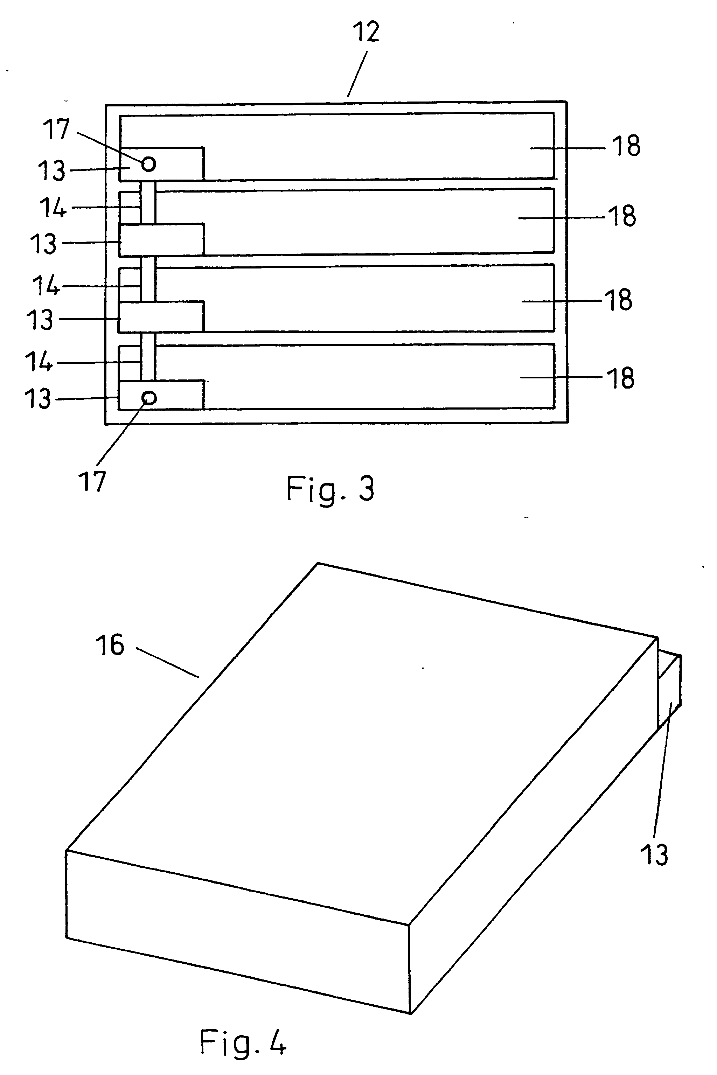

Figur 3 zeigt die Rückseite des Gestells oder Gehäuses 12. An jedem Fach ist, wie bereits beschrieben, ein Steckverbindungselement 13 angeordnet. Die Steckverbindungselemente 13 sind über die erste Busleitung 14 miteinander verbunden. Zum Anschluss der zweiten Busleitung sind zwei Anschlüsse 17 an der ersten Busleitung 14 vorgesehen.

In der Figur 4 ist ein quaderförmig ausgebildetes Modul 16 dargestellt.

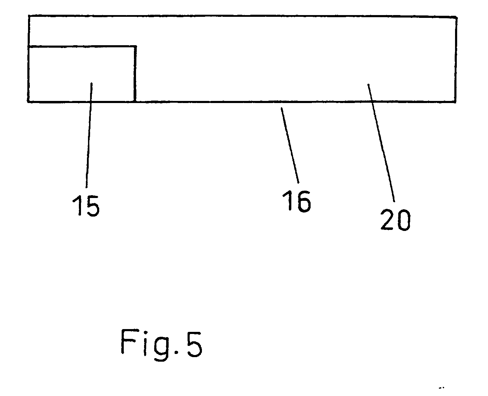

In der Figur 5 ist die Rückseite 20 des Moduls 16 abgebildet. An der Rückseite des Moduls 16 ist ein Steckverbindungselement 19 angeordnet, das zu den Steckverbindungselementen 13 der Fächer kompatibel ist.

Die Steckverbindungselemente können z. B. alle untereinander kompatibel sein, so dass jedes beliebige Modul in ein beliebiges Fach steckbar ist. Die Steckverbindungselemente können aber auch modulspezifisch ausgeführt sein, so dass in ein Fach nur das für dieses Fach vorgesehene Modul steckbar ist, ein anderes Modul passt dagegen nicht an die Steckverbindung.

Bei einer Multimediaanlage in einem Kraftfahrzeug ist das Gestell 12 oder Gehäuse vorzugsweise in der Mittelkonsole angeordnet. Das Bestücken des Gestells mit Modulen erfordert nur wenig Zeit und einen geringen Arbeitsaufwand. Ebenso einfach und schnell gestalten sich auch Nachrüstungen und Umrüstungen der erfindungsgemäßen Multimediaanlage, denn hierzu brauchen nur Module ausgetauscht oder neue Module in noch nicht belegte Fächer eingesetzt zu werden.

Die Erfindung ist besonders für eine Multimediaanlage in einem Kraftfahrzeug geeignet, jedoch nicht auf diesen Anwendungsfall beschränkt. Sie ist allgemein für elektronische Anlagen mit in einem Gestell oder einem Gehäuse untergebrachten Modulen und außerhalb des Gehäuses angeordneten Modulen geeignet.

### Bezugszeichenliste

- 1: Autoradio
- 2: CD-Spieler
- 3: DVD-Spieler
- 4: Kassettenspieler
- 5: Navigationsgerät
- 6: Bedienvorrichtung
- 7: Anzeigevorrichtung
- 8: Lautsprecher
- 9: Lautsprecher
- 10: Bildschirm
- 11: gemeinsame Busleitung
- 12: Gestell
- 13: Steckverbindungselement
- 14: erste Busleitung
- 15: zweite Busleitung
- 16: Modul
- 17: Anschluß für zweite Busleitung
- 18: Fach
- 19: Steckverbindungselement
- 20: Rückseite

## Patentansprüche

1. Elektronische Anlage mit einem Gehäuse oder einem Gestell (12) mit mehreren Fächern (18) zur Aufnahme von Modulen (1, 2, 3, 4, 5; 16), wobei
für jedes Fach (18) ein Steckverbindungselement (13) zum Anschließen eines in das Fach (18) steckbaren Moduls (1, 2, 3, 4, 5; 16) mit einem passenden Steckverbindungselement (19) vorgesehen ist,
alle Steckverbindungselemente (13) der Fächer (18) über eine erste Busleitung (14) miteinander verbunden sind, an die außerhalb des Gehäuses oder des Gestells (12) angeordnete Module (7, 8, 9) über eine zweite Busleitung (15) anschließbar sind, und
die erste und die zweite Busleitung (14, 15) eine gemeinsame Busleitung (11) bilden, **dadurch gekennzeichnet, dass**
die gemeinsame Busleitung (11) als Ringleitung ausgebildet ist.

2. Elektronische Anlage nach Anspruch 1, **dadurch gekennzeichnet, dass** die Steckverbindungselemente (13, 19) modulspezifisch ausgeführt sind.

3. Elektronische Anlage nach Anspruch 1 oder 2, **dadurch gekennzeichnet, dass** alle Steckverbindungen (13) der Fächer (18) untereinander und alle dazu passenden Steckverbindungen (19) der Module (16) untereinander gleich sind, so dass jedes Modul in jedes Fach steckbar ist.

4. Elektronische Anlage nach einem der vorangegangenen Ansprüche, **dadurch gekennzeichnet, dass** eine Bedienvorrichtung (6) an die gemeinsame Busleitung (11) angeschlossen ist.

5. Elektronische Anlage nach einem der vorangegangenen Ansprüche, **dadurch gekennzeichnet, dass** eine optische und/oder akustische Anzeigevorrichtung (7) zur Anzeige von Informationen an die gemeinsame Busleitung (11) angeschlossen ist.

6. Elektronische Anlage nach einem der vorangegangenen Ansprüche, **dadurch gekennzeichnet, dass** zumindest ein Teil der Module (1, 2, 3, 4, 5, 6, 7, 8, 9, 10) Multimediageräte sind.

7. Elektronische Anlage nach einem der vorangegangenen Ansprüche, **dadurch gekennzeichnet, dass** das Gehäuse oder Gestell (12) in ein Kraftfahrzeug einbaubar ist.

8. Elektronische Anlage nach Anspruch 7, **dadurch gekennzeichnet, dass** das Gehäuse oder das Gestell (12) in die Mittelkonsole des Kraftfahrzeugs einbaubar ist.

## Claims

1. Electronic equipment with a housing or a frame (12) with a plurality of compartments (18) for receiving modules (1, 2, 3, 4, 5; 16), wherein a plug connecting element (13) is provided for each compartment (18) for connecting a module (1, 2, 3, 4, 5; 16) insertable into the compartment (18) to a passive plug connecting element (19), all the plug connecting elements (13) of the components (18) are connected together by means of a first bus-bar (14), to which modules (7, 8, 9) disposed outside the housing or the frame (12) may be connected by means of a second bus-bar (15), and the first and second bus-bars (14, 15) constitute a common bus-bar (11), **characterised in that** the common bus-bar (11) constitutes a ring line.

2. Electronic equipment as claimed in Claim 1, **characterised in that** the plug connecting elements (13, 19) are of module-specific construction.

3. Electronic equipment as claimed in Claim 1 or 2, **characterised in that** all the plug connections (13) of the compartments (18) are the same as one another and all the matching plug connectors (19) of the modules (16) are the same as one another so that each module may be inserted into each compartment.

4. Electronic equipment as claimed in one of the preceding claims, **characterised in that** an operating device (6) is connected to the common bus-bar (11).

5. Electronic equipment as claimed in one of the preceding claims, **characterised in that** an optical and/or acoustic indicating device (7) for indicating information is connected to the common bus-bar (11).

6. Electronic equipment as claimed in one of the preceding claims, **characterised in that** at least a proportion of the modules (1, 2, 3, 4, 5, 6, 7, 7, 8, 9, 10) are multimedia devices.

7. Electronic equipment as claimed in one of the preceding claims, **characterised in that** the housing or frame (12) may be installed in a motor vehicle.

8. Electronic equipment as claimed in Claim 7, **characterised in that** the housing or the frame (12) is installable into the dashboard of the motor vehicle.

## Revendications

1. Equipement électronique avec un boîtier ou un support (12) à plusieurs compartiments (18) pour réceptionner des modules (1, 2, 3, 4, 5 ; 16),
pour chaque compartiment (18), un élément à fiche de raccordement (13) étant prévu pour raccorder un module (1, 2, 3, 4, 5 ; 16) enfichable dans le compartiment (18) avec un élément à fiche de raccordement (19) correspondant,
tous les éléments à fiche de raccordement (13) des compartiments (18) étant reliés entre eux par une première ligne de bus (14) et pouvant être raccordés par une deuxième ligne de bus (15) sur les modules (7, 8, 9) disposés à l'extérieur du boîtier ou du support (12) et
la première et la deuxième ligne de bus (14, 15) formant une ligne de bus commune (11), **caractérisé en ce que**
la ligne de bus commune (11) est conçue en tant que ligne annulaire.

2. Equipement électronique selon la revendication 1, **caractérisé en ce que** les éléments à fiche de raccordement (13, 19) sont réalisés de façon spécifique aux modules.

3. Equipement électronique selon la revendication 1 ou 2, **caractérisé en ce que** toutes les fiches de raccordement (13) des compartiments (18) sont identiques entre elles et toutes les fiches de raccordement (19) des modules (16) adaptées à ces dernières sont identiques entre elles, de façon à ce que chaque module puisse être enfiché dans chaque compartiment.

4. Equipement électronique selon l'une quelconque des revendications précédentes, **caractérisé en ce qu'**un dispositif de commande (6) est raccordé sur la ligne de bus (11) commune.

5. Equipement électronique selon l'une quelconque des revendications précédentes, **caractérisé en ce qu'**un dispositif d'affichage optique et/ou acoustique (7) est raccordé sur la ligne de bus commune (11), pour afficher des informations.

6. Equipement électronique selon l'une quelconque des revendications précédentes, **caractérisé en ce qu'**une partie des modules (1, 2, 3, 4, 5, 6, 7, 8, 9, 10) est formée par des appareils multimédia.

7. Equipement électronique selon l'une quelconque des revendications précédentes, **caractérisé en ce que** le boîtier ou le support (12) peut être monté dans un véhicule automobile.

8. Equipement électronique selon la revendication 7, **caractérisé en ce que** le boîtier ou le support (12) peut être monté dans la console centrale du véhicule automobile.
